# EUROPÄISCHE PATENTSCHRIFT

(11) **EP 0 425 897 B1**
(45) Veröffentlichungstag und Bekanntmachung des Hinweises auf die Patenterteilung: **03.03.1993**
(21) Anmeldenummer: 90119919.0
(22) Anmeldetag: 17.10.1990
(51) Int. Cl.: G05B 23/02

(54) **Verfahren zum Betrieb eines Steuerungssystems**
Method for operating a control system
Procédé de fonctionnement d'un dispositif de commande

(30) Priorität: 31.10.1989 DE 3936557
(43) Veröffentlichungstag der Anmeldung: 08.05.1991
(73) Patentinhaber: SIEMENS AKTIENGESELLSCHAFT, 80333 München (DE)
(72) Erfinder: Maul, Jürgen, Dipl.-Ing.(FH), W-8458 Sulzbach-Rosenbach (DE); Wagner, Wolfgang Dipl.-Ing.(FH), W-8430 Neumarkt (DE); Wölfel, Ulrich, Dipl.-Ing., W-6729 Hagenbach (DE)

(56) Entgegenhaltungen:
- EP-A- 0 275 992
- EP-A- 0 285 667
- DE-A- 3 522 220

## Beschreibung

Die Erfindung bezieht sich auf ein Verfahren zum Betrieb eines Steuerungssystems gemäß dem Oberbegriff des Anspruchs 1.

Ein derartiges Verfahren ist beispielsweise aus der EP 0 285 667 Al bekannt. Gemäß diesem Verfahren werden bei Prozeßalarmen Interrupts ausgelöst, die an die Zentraleinheit gemeldet werden. Eine weitergehende Vorverarbeitung der Alarme und eine Entlastung der Zentraleinheit ist aus dieser Schrift jedoch nicht bekannt.

Aus der DE 35 22 220 Al ist bekannt, auf Ausgabebaugruppen einen Prozessor anzuordnen. Der Prozessor überwacht, ob in regelmäßigen Abständen neue Ausgabesignale an die Ausgabebaugruppen übermittelt werden. Bei Nichtübermittlung neuer Ausgabewerte gibt der Prozessor auf der Baugruppe abgespeicherte Noteinstellwerte aus. Ferner meldet er die Nichtübermittlung neuer Ausgabewerte über ein Anzeigeelement.

Das Steuerungssystem der vorliegenden Erfindung besteht aus einem Rechenwerk, das seinerseits aus mehreren zentralen Prozeßeinheiten (CPU) bestehen kann. An die parallelgeschalteten oder auf andere Weise vernetzten CPU sind über einen Bus mehrere elektronische Baugruppen angeschlossen. An Jede der elektronischen Baugruppen können beispielsweise Stellglieder oder Meßfühler angeschlossen sein. Bei dem Steuerungssystem treten, statistisch betrachtet, die meisten Fehler außerhalb des Rechenwerks auf. Von diesen Fehlern bestehen die meisten darin, daß ein Drahtbruch eintritt oder daß elektrische Kontakte gelöst werden. Das bedeutet aber, daß die Hardware und Software der einzelnen elektronischen Baugruppen intakt bleibt.

Bisher wird eine Fehlerdiagnose derart durchgeführt, daß das Rechenwerk über einen seiner Prozessoren in gewissen Abständen alle Baugruppen nach Fehlern abfragt. Das bedeutet eine hohe zeitliche Belastung für die jeweils abfragende Prozessoreinheit, sowie für den Bus.

Der Erfindung liegt daher die Aufgabe zugrunde, ein Verfahren zum Betrieb des Steuerungssystems zu schaffen, bei dem die Belastung der Prozessoreinheit und des Bus bei der Fehlerkontrolle möglichst gering gehalten wird.

Die Aufgabe wird erfindungsgemäß dadurch gelöst,
- daß in jeder Baugruppe ein Prozessor angeordnet ist,
- daß der Prozessor sich selbst, die Baugruppe, die an die Baugruppe angeschlossenen Eingabe- und Ausgabekomponenten, die Datenleitungen zum Rechenwerk und die Datenleitungen zu den Eingabe- und Ausgabekomponenten, auf Fehler überwacht und
- daß das Interruptsignal vom Prozessor an das Rechenwerk gesendet wird.

Der Vorteil des erfindungsgemäßen Verfahrens liegt darin, daß das Rechenwerk mit Fehlern, die in den Baugruppen und deren Zuleitungen auftreten, nur dann befaßt wird, wenn ein solcher Fehler tatsächlich auftritt. Die Onboardprozessoren überwachen ständig alle Zuleitungen der Baugruppen, um Drahtbrüche oder sonstige Kontaktfehler sowie Defekte an Eingabebaugruppen wie z. B. Meßfühlern zu erfassen. Außerdem überprüft jeder Onboardprozessor sich selbst.

Eigene Fehler können durch einen Onboardprozessor beispielsweise dadurch festgestellt werden, daß in bestimmten Zeitabständen eine Speicherzelle durch den Prozessor aufgefüllt wird, die durch einen Zähler beim Durchlaufen der Mikroprogramme regelmäßig dekrementiert wird. Ist der Inhalt dieser Speicherzelle auf Null angekommen, bedeutet das, daß der Onboardprozessor den Programmteil, in dem die Speicherzelle aufgefüllt werden sollte, seit längerer Zeit nicht durchlaufen hat, woraus geschlossen wird, daß der Onboardprozessor sich in seinem Mikroprogramm "verlaufen" hat. In diesem Fall steht der Onboardprozessor nicht mehr für intelligente Operationen zur Verfügung. Es wird ein Interruptsignal über eine gesonderte Leitung an das Rechenwerk gesendet.

Der Zustand des Onboardprozessors kann auch dadurch getestet werden, daß in genau festgelegten Zyklen bestimmte Standardberechnungen durchgeführt werden, deren Ergebnis mit ihrem Sollergebnis verglichen wird (beispielsweise Sinusberechnung). Stimmt der jeweils berechnete Wert nicht mit dem Sollwert überein, so ist das ein Zeichen dafür, daß der Onboardprozessor nicht einsatzfähig ist.

Das Prinzip der aktiven Fehlermeldung der einzelnen Baugruppen an das Rechenwerk hat außer der Entlastung des Rechenwerkes und des Bus noch den Vorteil, daß die Fehler von den Baugruppen auch dann an das Rechenwerk gemeldet werden, wenn die fehlerhafte Baugruppe gerade nicht genutzt wird. Auf diese Weise können Fehler schnell bemerkt und vom Rechenwerk gegebenenfalls verarbeitet werden.

Das erfindungsgemäße Verfahren kann dadurch ausgestaltet werden, daß jeder der Prozessoren im Falle eines Fehlers zusätzlich zum Senden des Interruptsignals Informationen über die Art des Fehlers und die Stelle seines Auftretens in einem Fehlerregister der Baugruppe in codierter Form ablegt, und daß das Rechenwerk, nachdem es die Baugruppe gefunden hat, die das Interruptsignal gesendet hat, aus dem Fehlerregister dieser Baugruppe die Daten ausliest und auf den aufgetretenen Fehler geeignet reagiert.

Auf diese Weise ist sichergestellt, daß das Rechenwerk in kürzester Zeit alle Informationen über den Ort und die Art des Fehlers erhält.

Der betreffende Onboardprozessor auf der Baugruppe stellt fest, auf welchem der Eingangs- bwz. Ausgangskanäle der jeweiligen Baugruppe ein Fehler aufgetreten ist und gegebenenfalls, welche Fehlerursache vorliegt. Die Lokalisierung des Fehlers sowie die Fehlerursache wird in codierter Form in einem Register innerhalb der Baugruppe abgelegt. Nachdem die Baugruppe den Fehler aktiv (per Interrupt) an das Rechenwerk gemeldet hat, geht eine der Prozessoreinheiten des Rechenwerks in ein spezielles Suchprogramm und fragt zunächst alle Baugruppen ab, um festzustellen welche die Fehlermeldung abgeschickt hat. Darauf liest die Prozessoreinheit das Register der Baugruppe, die die Fehlermeldung abgeschickt hat, aus. Nachdem die Prozessoreinheit so zunächst einmal festgestellt hat, ob es sich um einen Fehleralarm (z. B. Gerätedefekt) oder um einen Prozeßalarm (z. B. bestimmte Prozeßdaten außerhalb der zugelassenen Grenzen) handelt, betreibt sie im Fall eines Fehleralarms ein Ersatzprogramm, bei dem beispielsweise bin anderer Meßfühler als der jeweils zerstörte betrieben wird.

Die Erfindung kann weiterhin dadurch ausgestaltet werden, daß das Rechenwerk, falls eine Eingabekomponente oder ihre Zuleitung zu der Baugruppe defekt ist, anstelle des von der Eingabekomponente zu übermittelnden Wertes aus einem Meßwertregister auf der Baugruppe einen dort abgelegten Ersatzwert ausliest und diesen für die vorläufige Fortsetzung des zu steuernden Prozesses weiteren Entscheidungen zugrundelegt.

Jede der elektrischen Baugruppen, die als Eingabebaugruppe des Steuerungssystems dienen und an die beispielsweise Meßfühler angeschlossen sind, verfügt über eine Speichereinheit zur Speicherung von Parametern, die die Betriebsart der Baugruppe festlegen und zur Speicherung der Meßdaten. Die Speichereinheit für die Meßdaten ist zweigeteilt. Im ersten Teil, dem Meßwertregister, sind die realen Meßwerte gespeichert, die ständig aktualisiert werden. Im zweiten Teil, dem Ersatzwertregister, ist mindestens für die wichtigsten zu messenden Größen jeweils ein Ersatzwert gespeichert, der anstelle des Meßwertes an das Rechenwerk geleitet wird, falls der entsprechende Meßfühler oder seine Zuleitung defekt ist. Der Ersatzwert kann bei der Projektierung des Steuerungssystems vom Benutzer so festgelegt werden, daß das Rechenwerk unter Zugrundelegen dieses Wertes den zu steuerden Prozeß für eine kurze Zeit weiterführen kann. Der Ersatzwert kann zu jeder Zeit, auch im Betrieb (at run time) dem laufenden Prozeß angepaßt werden. Der Ersatzwert wird von dem Onboardprozessor der jeweiligen Baugruppe im Falle eines Fehlers aus dem Ersatzwertregister ausgelesen und in das Meßwertregister hineinkopiert. Auf das Meßwertregister greift dann das Rechenwerk zu. Dadurch steht der Ersatzwert für alle Prozessoreinheiten des Rechenwerkes gleichzeitig schnell zur Verfügung. Es ist keine Übermittlung des Ersatzwertes zum Rechenwerk von der Baugruppe aus notwendig. Der Ersatzwert wird auf dieselbe Weise übermittelt, wie die Meßwerte während des störungsfreien Betriebes.

Im folgenden wird die Erfindung anhand eines Ausführungsbeispiels in einer Zeichnung gezeigt und anschließend beschrieben.

Dabei zeigt
Figur 1: das Steuerungssystem mit angeschlossenen Baugruppen,
Figur 2: eine Baugruppe in ihrem Aufbau.

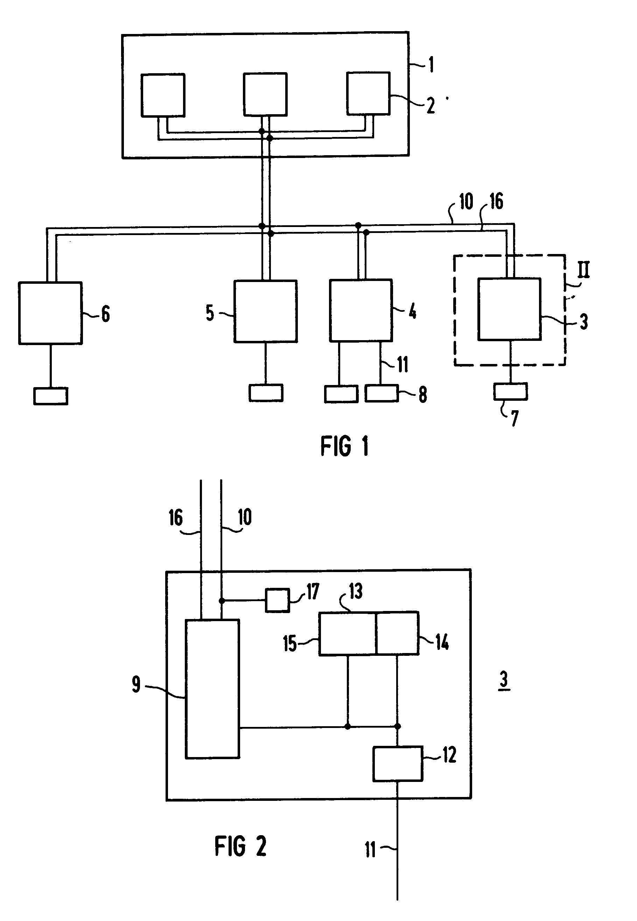

Figur 1 zeigt das Rechenwerk 1 mit den Prozessoren 2. Die Prozessoren sind untereinander vernetzt, um eine effektive Arbeitsteilung zu gewährleisten. Das Rechenwerk ist über Datenleitungen 10 sowie Interruptleitungen 16 mit den einzelnen Baugruppen 3, 4, 5, 6 verbunden. Es sind acht Interruptleitungen vorhanden, über die von den einzelnen Onboardprozessoren Signale gesendet werden können. Eine neunte Interruptleitung ist für den Fall vorgesehen, daß ein Onboardprozessor defekt ist und keine intelligente Fehlermeldung mehr möglilch ist. An jede der Baugruppen 3, 4, 5, 6 sind Ein- und/oder Ausgabekomponenten, wie z. B. Meßfühler 7, 8 über Datenleitungen 11 angeschlossen. Jede der Baugruppen 3, 4, 5, 6 enthält einen Onboardprozessor, der über Fehler wacht, die innerhalb der Baugruppe oder an den Eingangs- bzw. Ausgangsleitungen auftreten. Tritt ein Fehler in einer der Baugruppen auf, so sendet der entsprechende Onboardprozessor der Baugruppe ein Interruptsignal über eine der acht Interruptleitungen. Fällt der Onboardprozessor selbst aus, so wird ein Interruptsignal auf der neunten Interruptleitung gesendet. Das Rechenwerk reagiert jeweils geeignet auf die entsprechende Fehlermeldung, dadurch daß es beispielsweise bei einem Drahtbruch an der Zuleitung eines Meßfühlers einen Ersatzmeßfühler einsetzt.

Figur 2 zeigt schematisch den internen Aufbau einer elektronischen Baugruppe 3. Über die Datenleitung 11 werden der Baugruppe von dem angeschlossenen Meßfühler 7 Daten in analoger Form übermittelt. Die Daten werden innerhalb der Baugruppe in der Digitalisierungseinrichtung 12 digitalisiert. Danach werden die Daten in der Speichereinheit 13 im Meßwertregister 14 abgelegt. Von dort sind die Daten durch den Onboardprozessor 9 abrufbar und können über die Datenleitungen 10 zum Rechenwerk übertragen werden. Fehler, die in der Baugruppe selbst oder bei einer der Zuleitungen bzw. bei einem Meßfühler auftreten, werden durch den Onboardporzessor 9 über eine der Interruptleitungen 16 an das Rechenwerk 1 gemeldet. Die Speichereinheit 13 besitzt außer dem meßwertregister 14 noch ein Ersatzwertregister 15. In dem Ersatzwertregister 15 ist während des Betriebs des Steuerungssystems ständig für jede gemessene Größe ein Ersatzwert gespeichert. Dieser Ersatzwert kann vom Benutzer bei der Projektierung des Steuerungssystems festgelegt werden. Der Ersatzwert ist zu jeder Zeit, auch im Betrieb (at run time), änderbar. Im Falle eines Fehleralarms wird an die Stelle des fehlerhaften Meßwertes im Meßwertregister der entsprechende Ersatzwert aus dem Ersatzwertregister gestellt. Das Rechenwerk 1 liest dann weiterhin seine Werte aus dem Meßwertregister 14 der Baugruppe aus. Der Ersatzwert ist jeweils so gewählt, daß das Rechenwerk mindestens eine zeitlang den zu steuernden Prozeß auf der Basis des Ersatzwertes unter vertretbaren Bedingungen forsetzen kann.

## Patentansprüche

1. Verfahren zum Betrieb eines Steuerungssystems, das ein Rechenwerk (1) und elektronische Baugruppen (3-6) aufweist, wobei das Rechenwerk (1) und die Baugruppen (3-6) über Datenleitungen (10) miteinander verbunden sind, wobei an die Baugruppen (3-6) Eingabe- und Ausgabekomponenten (7,8) angeschlossen sind,
- wobei nach Feststellen eines Fehlers in einer der Baugruppen (3-6) von der jeweiligen Baugruppe (z.B. 3) ein Interruptsignal an das Rechenwerk (1) gesendet wird und nach dem Eingehen des Interruptsignals im Rechenwerk (1) dieses ein Suchprogramm startet, in dessen Verlauf die angeschlossenen Baugruppen (3-6) daraufhin überprüft werden, welche von ihnen das Interruptsignal gesendet hat
**dadurch gekennzeichnet,**
- daß in jeder Baugruppe (3-6) ein Prozessor (9) angeordnet ist,
- daß der Prozessor (9) sich selbst, die Baugruppe (3), die an die Baugruppe (3) angeschlossenen Eingabe- und Ausgabekomponenten (7,8), die Datenleitungen (10) zum Rechenwerk (1) und die Datenleitungen (11) zu den Eingabe- und Ausgabekomponenten (7,8), auf Fehler überwacht und
- daß das Interruptsignal vom Prozessor (9) an das Rechenwerk (1) gesendet wird.

2. Verfahren nach Anspruch 1, **dadurch gekennzeichnet,**
- daß jeder der Prozessoren (9) im Falle eines Fehlers zusätzlich zum Senden des Interruptsignals Informationen über die Art des Fehlers und die Stelle seines Auftretens in einem Fehlerregister (17) der Baugruppe (3-6) in codierter Form ablegt und
- daß das Rechenwerk (1), nachdem es die Baugruppe (3-6) gefunden hat, die das Interruptsignal gesendet hat, aus dem Fehlerregister (17) dieser Baugruppe (z.B. 3) die Daten ausliest und auf den aufgetretenen Fehler geeignet reagiert.

3. Verfahren nach Anspruch 1 oder 2, **dadurch gekennzeichnet,** daß das Rechenwerk (1), falls eine Eingabekomponente (7,8) oder ihre Zuleitung (11) zu der Baugruppe (3-6) defekt ist, anstelle des von der Eingabekomponente (7,8) zu übermittelnden Wertes aus einem Meßwertregister (14) auf der Baugruppe einen dort abgelegten Ersatzwert ausliest und diesen für die vorläufige Fortsetzung des zu steuernden Prozesses weiteren Entscheidungen zugrundelegt.

4. Verfahren nach Anspruch 1, 2 oder 3, **dadurch gekennzeichnet,** daß sich der Prozessor (9) dadurch selbst überwacht, daß er in bestimmten Zeitabständen eine Speicherzelle auffüllt, die durch einen Zähler beim Durchlaufen der Mikroprogramme dekrementiert wird, und daß auf Prozessorfehler erkannt wird, wenn der Inhalt dieser Speicherzelle auf Null angekommen ist.

5. Verfahren nach Anspruch 1, 2 oder 3, **dadurch gekennzeichnet,** daß der Prozesor (9) sich dadurch selbst überwacht, daß er in festgelegten Zyklen bestimmte Standardberechnungen, z.B. Sinusberechnungen, durchführt, deren Ergebnis mit ihrem Sollergebnis verglichen wird, und daß auf Prozessorfehler erkannt wird, wenn die Werte nicht übereinstimmen.

## Claims

1. Method for operating a control system which has an arithmetic unit (1) and electronic subassemblies (3-6), the arithmetic unit (1) and the subassemblies (3-6) being connected together by way of data lines (10), with input and output components (7, 8) being connected to the subassemblies (3-6),
- whereby, after the location of an error in one of the subassemblies (3-6), an interrupt signal is transmitted by the respective subassembly (for example, 3) to the arithmetic unit (1) and, after entry of the interrupt signal in the arithmetic unit (1), this arithmetic unit starts a search program, in the course of which the connected subassemblies (3-6) are checked to determine which of them transmitted the interrupt signal,
characterised in that,
- in each subassembly (3-6) there is arranged a processor (9),
- the processor (9) itself, the subassembly (3), the input and output components (7, 8) connected to the subassembly (3), the data lines (10) to the arithmetic unit (1) and the data lines (11) to the input and output components (7, 8) are monitored for errors by the processor (9) and
- the interrupt signal is transmitted to the arithmetic unit (1) by the processor (9).

2. Method according to claim 1, characterised in that
- in the case of an error, each of the processors (9), in addition to transmitting the interrupt signal, stores in coded form in an error register (17) of the subassembly (3-6), data concerning the type of error and the position of its occurrence, and
- the arithmetic unit (1), after it has located the subassembly (3-6) which transmitted the interrupt signal, reads out the data from the error register (17) of this subassembly (for example, 3) and reacts in an appropriate manner to the error which has occurred.

3. Method according to claim 1 or 2,
characterised in that the arithmetic unit (1) reads out from a measured value register (14) on the subassembly, a substitute value stored in the measured value register (14), if an input component (7, 8) or its supply (11) to the subassembly (3-6) is faulty, instead of the value to be transmitted by the input component (7, 8), and uses this substitute value as the basis of further decisions for continuing temporarily the process to be controlled.

4. Method according to claim 1, 2 or 3,
characterised in that the processor (9) monitors itself by filling up a storage location at predetermined intervals, which storage location is decremented by means of a counter during cycling of the microprogram, and in that processor errors are detected when the content of this storage location has reached zero.

5. Method according to claim 1, 2 or 3,
characterised in that the processor (9) monitors itself by carrying out in fixed cycles predetermined standard calculations, for example sine calculations, the result of which is compared with their desired result, and in that processor errors are detected when the values do not agree.

## Revendications

1. Procédé pour faire la mise en oeuvre d'un système de commande qui comporte une unité de calcul (1) et des modules électroniques (3-6), l'unité de calcul (1) et les modules (3-6) étant reliés entre eux par l'intermédiaire de lignes de transmission de données (10), et selon lequel des composants d'entrée et de sortie (7,8) sont raccordés aux modules (3-6), et
- qu'après détermination d'un défaut dans l'un des modules (3-6), un signal d'interruption est envoyé par le module respectif (par exemple 3) à l'unité de calcul (1), alors qu'après introduction du signal d'interruption dans l'unité de calcul (1), cette dernière déclenche un programme de recherche, lors de l'exécution duquel un contrôle est appliqué aux modules raccordés (3-6) pour déterminer lequel de ces modules a émis le signal d'interruption,
caractérisé par le fait
- qu'un processeur (9) est disposé dans chaque module (3-6),
- que le processeur (9) contrôle la présence de défauts en lui-même, dans les modules (3), dans les composants d'entrée et de sortie (7,8) raccordés aux modules (3), dans les lignes de transmission de données (10) aboutissant à l'unité de calcul (1) et dans les lignes de transmission de données (11) aboutissant aux composants d'entrée et de sortie (7,8), et
- que le signal d'interruption est envoyé par le processeur (9) à l'unité de calcul (1).

2. Procédé suivant la revendication 1, caractérisé par le fait
- que, dans le cas d'un défaut, en plus de l'émission du signal d'interruption, chacun des processeurs (9) mémorise sous forme codée, dans un registre de défauts (17) des modules (3-6), des informations concernant le type du défaut et l'emplacement de son apparition, et
- qu'après avoir déterminé le module (3-6), qui a émis le signal d'interruption, l'unité de calcul (1) lit les données à partir du registre de défauts (17) de ce module (par exemple 3) et réagit de façon appropriée au défaut apparu.

3. Procédé suivant la revendication 1 ou 2, caractérisé par le fait que dans le cas où un composant d'entrée (7,8) ou sa ligne (11) de raccordement au module (3-6) est défectueux, l'unité de calcul (1) lit à partir d'un registre de valeurs de mesure (14) situé dans le module non pas la valeur devant être transmise par le composant d'entrée (7,8), mais une valeur de remplacement mémorisée dans ce registre et prend comme base, pour cette valeur de remplacement, d'autres décisions pour la poursuite provisoire du processus à commander.

4. Procédé suivant la revendication 1, 2 ou 3, caractérisé par le fait que le processeur (9) se contrôle lui-même en ce qu'à des intervalles de temps déterminés, il remplit une cellule de mémoire, qui est décrémentée par un compteur lors de l'exécution des microprogrammes, et que des défauts du processeur sont identifiés lorsque le contenu de cette cellule de mémoire devient nul.

5. Procédé suivant la revendication 1, 2 ou 3, caractérisé par le fait que le processeur (9) se contrôle de lui-même en ce que dans des cycles déterminés, il exécute des calculs standards déterminés, par exemple des calculs de sinus, dont le résultat est comparé à son résultat de consigne et que des défauts du processeur sont identifiés lorsque les valeurs ne coïncident pas.
